# EUROPEAN PATENT SPECIFICATION

(11) **EP 4 606 600 B1**
(45) Date of publication and mention of the grant of the patent: **11.03.2026**
(21) Application number: 25152476.5
(22) Date of filing: 17.01.2025
(51) Int. Cl.: B60C 9/00, B60C 9/20, B60C 11/00

(54) **PNEUMATIC TIRE**
LUFTREIFEN
PNEUMATIQUE

(30) Priority: 14.02.2024 JP 2024020527
(43) Date of publication of application: 27.08.2025
(73) Proprietor: Sumitomo Rubber Industries, Ltd., Kobe-shi, Hyogo 651-0072 (JP)
(72) Inventor: IMAI, DAIKI, Kobe-shi, 651-0072 (JP); WAKIZONO, AYA, Kobe-shi, 651-0072 (JP); MISAKI, MOMOKA, Kobe-shi, 651-0072 (JP)
(74) Representative: Manitz Finsterwald Patent- und Rechtsanwaltspartnerschaft mbB

(56) References cited:
- EP-B1- 3 713 776
- US-A1- 2022 009 289
- US-A1- 2023 294 455

## Description

### Technical field

The present invention relates to a pneumatic tire.

### Background art

Patent Document 1 below discloses a tire in which the thickness of the tread portion and the loss tangent of the cap rubber layer of the tread portion are specifically defined in order to improve the rolling resistance when the vehicle starts.

Patent Document 1: Japanese Patent No. 7337333

A pneumatic tire in accordance with the preamble of claim 1 is known from EP 3 713 776 B1.

### Summary of the Invention

### Problems to be solved by the Invention

In recent years, there is a demand for improvements in the fuel efficiency/electricity efficiency of automobiles, therefore, tires attached to such automobiles are required to have further reduced rolling resistance.

Known methods for reducing the rolling resistance of tires include reducing the volume of the tread rubber, reducing the volume of the belt layer, and decreasing the loss tangent of the tread rubber.

However, no matter which of the above methods is employed, there is a tendency that small vibrations of the tires during running are transmitted to the vehicle body, and thereby ride comfort is deteriorated.

The present invention was made in view of the above-described circumstances, and a primary objective of the present invention is to provide a pneumatic tire of which rolling resistance performance can be improved without deteriorating the ride comfort performance.

### Means for solving the problems

According to the present invention, a pneumatic tire comprises a tread portion provided with:
a reinforcing cord layer including at least one belt ply of steel cords rubberized with topping rubber; and
a tread rubber forming a part of the tread portion from a ground contacting surface of the tread portion to the radially outer side of the reinforcing cord layer, wherein
a product (T1 x T2 x La x tanδ1) of a thickness T1 (mm) of the tread rubber measured at the tire equator, an average thickness T2 (mm) of the or each belt ply, a land ratio La of the ground contacting surface, and a loss tangent tanδ1 of the tread rubber at 30 degrees C, is in a range from 0.33 to 1.10, wherein the loss tangent value is measured according to Japanese Industrial Standards (JIS) K6394 under the conditions of Initial strain: 10%, Dynamic strain amplitude: +/- 2%, Frequency: 10Hz and Deformation mode: tension. The steel cords each have a 1 x n cord structure consisting of a number n of filaments each having an outer diameter of 0.15 to 0.30 mm.

### Effects of the Invention

In the pneumatic tire according to the present invention, as the product (T1 x T2 x La x tanδ1) is limited in the specific range from 0.33 to 1.10, the rolling resistance performance can be improved without deteriorating the ride comfort performance.

### Brief description of the drawings

FIG. 1 is a cross-sectional view of a tire as an embodiment of the present invention.
FIG. 2 is a cross-sectional view of the tread portion of the tire shown in FIG. 1.
FIG. 3 is a developed view showing an example of the arrangement of the cords of the reinforcing cord layer of the tire shown in FIG. 1.
FIG. 4 is a schematic cross-sectional view of an example of the steel cord.

### Detailed description of the Invention

Embodiments of the present invention will now be described in detail in conjunction with accompanying drawings.
The drawings may contain exaggerations and dimensional ratios different from the actual ratios in order to aid the understanding of the present invention.

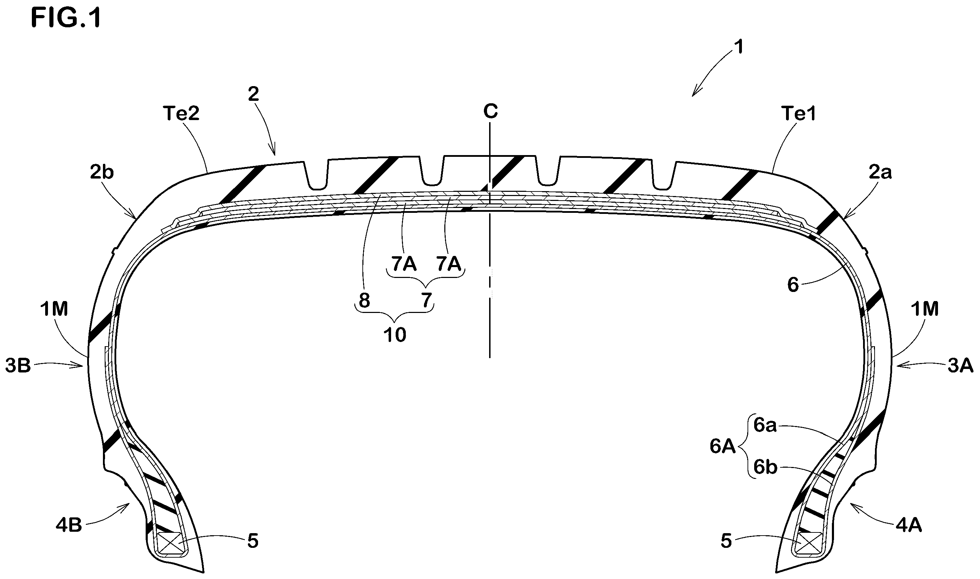

FIG. 1 shows a tire meridian cross-sectional view including the tire rotation axis, of a pneumatic tire 1 as an embodiment of the present invention, under its standard state. The present invention can be applied to pneumatic tires, in particular, suitably applied to passenger car tires although the present invention can be applied to tires in other categories, for example, heavy duty tires such as truck/bus tires. Thus, taking a pneumatic tire for a passenger car as an example, the embodiment will be described below.

In the case that, as in the present embodiment, the tire 1 according to the present invention is a type of pneumatic tire for which various standards have been established, the standard state is a state of the tire which is mounted on a standard heel rim and inflated to a standard inner pressure but loaded with no tire load.

In the case that the tire 1 is a tire for which various standards are not yet established, the "standard state" means a standard usage state depending on the purpose of use of the tire and in a condition in which the tire is not attached to a vehicle and no tire load is applied.

In this application including specification and claims, dimensions and positions of each part or portion of the tire refer to those under the standard state unless otherwise noted,

The "standard wheel rim" is a wheel rim specified for the tire in a standard system including standards on which the tire is based, for example, the "Standard rim" in JATMA, "Design Rim" in TRA, "Measuring Rim" in ETRTO.

The "standard tire pressure" is the air pressure specified for the tire in a standard system including standards on which the tire is based, for example, the "maximum air pressure" in JATMA, "INFLATION PRESSURE" in ETRTO, and the maximum air pressure listed in the table "TIRE LOAD LIMITS AT VARIOUS COLD INFLATION PRESSURES" in TRA.

The tire 1 comprises a tread portion 2, a first sidewall portion 3A, a second sidewall portion 3B, a first bead portion 4A and a second bead portion 4B.

The first sidewall portion 3A extends radially inwardly from a first end 2a in the tire axial direction of the tread portion 2 (right side end in each figure in this application). The second sidewall portion 3B extends radially inwardly from a second end 2b in the tire axial direction of the tread portion 2 (left side end in each figure in this application). The first sidewall portion 3A and the second sidewall portion 3B each include a tire maximum width position 1M on the axially outer surface.

The first bead portion 4A is continuous from the radially inner end of the first sidewall portion 3A. The second bead portion 4B is continuous from the radially inner end of the second sidewall portion 3B.

The tire 1 comprises a carcass 6 extending from the first bead portion 4A to the second bead portion 4B through the first sidewall portion 3A, the tread portion 2 and the second sidewall portion 3B.

The carcass 6 in the present embodiment is composed of one carcass ply 6A. The carcass ply 6A in this example is composed of a main body portion 6a and turned-up portions 6b. The main body portion 6a extends from the first bead portion 4A to the second bead portion 4B. The turned-up portions 6b are continuous from the main body portion 6a and are folded back in the respective bead portions 4A and 4B around the respective bead cores 5 from the inner side to the outer side in the tire axial direction.

The carcass ply 6A comprises a plurality of carcass cords and a topping rubber covering these cords (not shown).
As the carcass cords, for example, organic fiber cords such as aramid or rayon can be used. The carcass cords are preferably arranged at an angle of 70 to 90 degrees with respect to the tire equator C, for example. The tire 1 in the present embodiment has a radial carcass ply structure.

Note that, in this specification, numerical ranges for values of various parameters mean numerical ranges for average values of the respective parameters, unless otherwise specified.

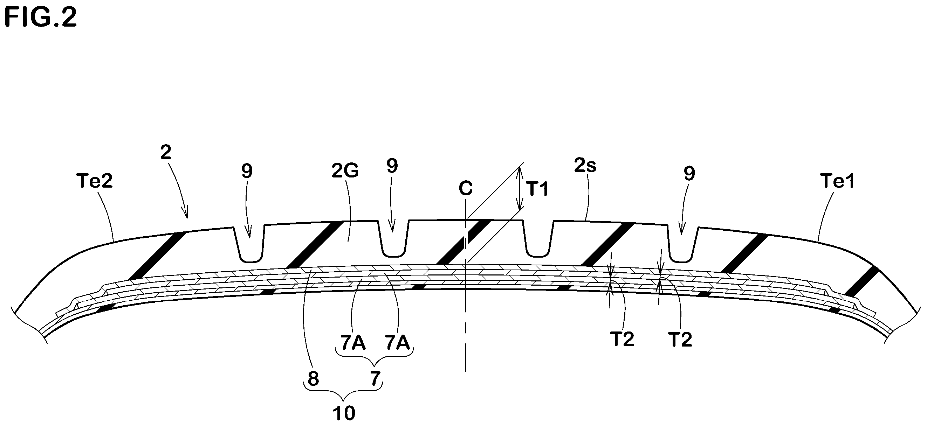

FIG. 2 shows a cross-sectional view of the tread portion 2 of the tire 1 shown in FIG. 1. As shown, the tread portion 2 in the present embodiment is provided with a reinforcing cord layer 10. The reinforcing cord layer 10 is disposed on the outside in the tire radial direction of the carcass 6 as shown in FIG. 1.

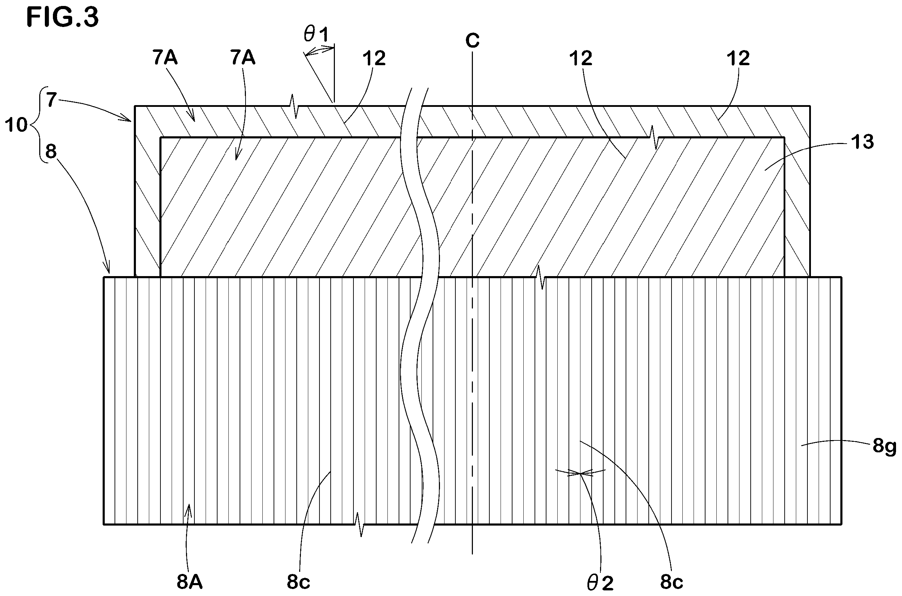

FIG. 3 shows a developed view schematically showing an example of the cord arrangement of the reinforcing cord layer 10. As shown, the reinforcing cord layer 10 in the present embodiment includes a belt layer 7 composed of at least one belt ply 7A of a plurality of steel cords 12 covered with topping rubber 13. The reinforcing cord layer 10 in the present embodiment further includes a band layer 8.

The belt layer 7 in the present embodiment is composed of radially outer and inner belt plies 7A which overlap one upon the other in the tire radial direction.
In each of the belt plies 7A, the steel cords 12 are arranged parallel with each other at an angle θ1 of 15 to 45 degrees with respect to the tire circumferential direction.
The steel cords 12 of the one belt ply 7A are inclined in the opposite direction to the steel cords 12 of the other belt ply 7A with respect to the tire circumferential direction in order to effectively reinforce the tread portion 2.
In the belt layer 7 in this example, as shown in FIG. 2, the radially inner belt ply 7A has an axial width so as to extend over substantially the entire axial width the of tread portion 2, and the radially outer belt ply 7A, which is disposed on the radially outer side of the radially inner belt ply 7A, has an axial width smaller than that of the inner belt ply 7A. Such belt layer is preferred, but the present invention is not to be limited to such design.

The band layer 8 in the present embodiment is composed of one band ply 8A. The band ply 8A in this example is composed of at least one band cord 8c spirally winded at an angle θ2 of not more than 5 degrees with respect to the tire circumferential direction, and a topping rubber 8g covering the at least one band cord.
The band layer 8 in the present embodiment is arranged so as to cover the entire axial width of the belt layer 7.
Preferably, the band layer 8 extends from an axially outer position than one of the axial edges of the wider belt ply 7A to an axially outer position than the other of the axial edges of the wider belt ply 7A so that the axial edges of the axially outer and inner belt plies 7A and 7A are covered with the band layer 8 as shown in FIG. 2.

The tread portion 2 comprises a tread rubber 2G which forms at least a part of the tread portion 2 from the ground contacting surface 2s of the tread portion 2 to the radially outer surface of the reinforcing cord layer 10 as shown in FIG. 2.
In FIG. 2, the tread rubber 2G is hatched as if it is composed of a single layer of rubber, but the present invention is not limited to such structure, the tread rubber 2G can be made up of a plurality of rubber layers.

The tread rubber 2G has a thickness T1 at the tire equator C of the tread portion 2. When a circumferential groove 9 etc. is provided at the position of the tire equator C, the thickness T1 means a thickness in a state where the circumferential groove 9 etc. is filled.

The tread rubber 2G has a loss tangent tanδ1 at 30 degrees C.
When the tread rubber 2G is made up of a plurality of rubber layers, the loss tangent tanδ1 means the average of loss tangent values of the respective rubber layers at 30 degrees C. obtained by being weighted by the respective rubber layers' volumes.
Here, the loss tangent value is measured using a viscoelastic spectrometer under the following conditions according to Japanese Industrial Standards (JIS) K6394.
Initial strain: 10%
Dynamic strain amplitude: +/- 2%
Frequency: 10Hz
Deformation mode: tension
Measuring temperature: 30 degrees C.

The tread portion 2 has first and second tread edges Te1 and Te2 which are defined as the axial outermost edges of the ground contacting patch of the tire which occurs when the tire under its standard state is contacted with a flat horizontal surface at a camber angle of 0 degrees and is loaded with a standard tire load for the tire.

The above-mentioned ground contacting surface 2s of the tread portion 2 is defined as a surface between the first and second tread edges Te1 and Te2.

In the case that the tire 1 is a type of pneumatic tire for which various standards have been established, the "standard tire load" is the load specified for the tire in a standard system including standards on which the tire is based, for example, the "maximum load capacity" in JATMA, "LOAD CAPACITY" in ETRTO, and the maximum tire load listed in the table "TIRE LOAD LIMITS AT VARIOUS COLD INFLATION PRESSURES" in TRA.

In the case that the tire 1 is a tire for which various standards are not yet established, the "standard tire load" means the maximum load that can be applied when the tire is used depending on the purpose of use.

The ground contacting surface 2s of the tread portion 2 has a land ratio La. The land ratio La means a ratio of the actual ground contacting area to the overall area or a virtual ground contacting area in which all grooves, sipes, recesses, etc. provided in the ground contacting surface 2s are filled.

In FIG. 2, only a plurality of circumferential grooves 9 which continuously extend in the tire circumferential direction, are shown as the grooves provided in the ground contacting surface 2s. But, the ground contacting surface 2s can be provided with lateral grooves extending in the tire axial direction (not shown).
In the present invention, the arrangement of such grooves is not particularly limited.

In the present invention, a product of T1 x T2 x La x tanδ1 is set in a range from 0.33 to 1.10, wherein
T1 is the above-mentioned thickness (mm) of the tread rubber 2G at the tire equator C, T2 is the average thickness (mm) of one belt ply 7A,
La is the land ratio of the ground contacting surface 2s of the tread portion, and tanδ1 is the loss tangent of the tread rubber 2G at 30 degrees C.
Thereby, in the tire 1 according to the present invention, the rolling resistance performance can be improved without deteriorating the ride comfort performance.
The reason is as follows.

The above-mentioned parameters can be determined independently.
Among these parameters, the thickness T1, the thickness T2 and the land ratio La each can decrease the tire weight by making the value smaller, and it becomes possible to improve the rolling resistance performance.
As to the loss tangent tanδ1, by making the value smaller, energy loss during rolling of the tire can be reduced more, and the rolling resistance performance can be improved.
That is, in each of the parameters T1, T2, La and tanδ1, by making the value smaller, the more improved rolling resistance performance can be obtained due to the above-explained mechanism.
However, when the value of each parameter becomes smaller, small vibrations of the tire during running become more easily transmitted to the vehicle body, and the ride comfort performance becomes liable to be deteriorated.

On the other hand, when the value of each of the parameters T1, T2, La and tanδ1 is increased, the ride comfort performance can be expected to improve, but the rolling resistance performance is liable to be deteriorated.

The inventors investigated the degree of change between each parameter and the rolling resistance performance and ride comfort performance.
As a result, it was discovered that at least within numerical ranges of the parameters in which the respective parameters are applicable to the normal tires (hereinafter referred to as the "applicable range"), the transient characteristics of the rolling resistance performance and ride comfort performance are similar between the parameters.
Further, as a result of more detailed investigation, it was discovered that the degree of the similarity described above is quite high, therefore, even if the parameters are multiplied and the product is treated as one parameter, there is no problem in controlling the rolling resistance performance and ride comfort performance.

In the present invention, based on the above-explained findings, the product T1 x T2 x La x tanδ1 is set within the specifically-defined range from 0.33 to 1.10.
As a result, the rolling resistance performance can be improved without deteriorating the ride comfort performance.
If the product T1 x T2 x La x tanδ1 is smaller than 0.33, the small vibrations of the tire will be easily sensed by the driver, and the ride comfort performance is deteriorated.
If the product T1 x T2 x La x tanδ1 is increased more than 1.10, further improvement in rolling resistance performance becomes no longer expected although the ride comfort performance is maintained.

In the present invention, an applicable range for the thickness T1 is 7 to 15.5 mm,
an applicable range for the thickness T2 is 0.5 to 2.0 mm,
an applicable range for the land ratio La is 0.40 to 0.95, and
an applicable range for the loss tangent tanδ1 is 0.10 to 0.30.

In the present invention, at least when these parameters are respectively within the above applicable ranges, the above-described effects can be expected.

Hereinafter, the present embodiment will be described in more detail. Each configuration described below represents a specific aspect of the present embodiment. Therefore, the present invention can exhibit the above-described effects even if it does not have the configuration described below. Further, even if any one of the configurations described below is applied singly to the tire of the present invention having the features described above, an improvement in performance corresponding to each configuration can be expected. Furthermore, when some of the respective configurations described below are applied in combination, it is possible to expect a combined improvement in performance according to the respective configurations.

In order to reliably obtain the above-described effects, it is preferable that the parameters T1, T2, La and tanδ1 are set so that the product T1 x T2 x La x tanδ1 falls within a range from 0.50 to 1.00.

On the other hand, even if the thickness T2 is excluded from the parameters constituting the product T1 x T2 x La x tanδ1, similar effects can be expected.
For that purpose, it is possible to adopt a product of T1 x La x tanδ1 which is preferably set in a range from 0.51 to 1.12.

The loss tangent tanδ1 is preferably not less than 0.12, more preferably not less than 0.14, but preferably not more than 0.22, more preferably not more than 0.20. Thereby, the heat generation of the tread portion 2 is optimized while reliably maintaining the ride comfort performance, and also the road noise reduction can be expected.

The land ratio La is preferably not less than 0.60, more preferably not less than 0.64, but preferably not more than 0.78, more preferably not more than 0.68.
Thereby, the ride comfort performance and rolling resistance performance are improved in a well-balanced manner.

From the similar point of view, the thickness T1 is preferably not less than 9.0 mm, more preferably not less than 9.5 mm, but preferably not more than 12.0 mm, more preferably not more than 11.6 mm.

The thickness T2 is preferably not more than 1.20 mm, more preferably not more than 1.00 mm. In the present embodiment, the thickness T2 is more preferably set in a range from 0.66 to 0.98 mm. In the present embodiment, for each of the two belt plies 7A, the thickness T2 is set in the above range.
The belt layer 7 composed of such belt ply or plies 7A can achieve a weight reduction while exhibiting the reinforcing effect on the tread portion 2, and the rolling resistance performance can be reliably improved.

From a similar point of view, it is preferable that the weight per unit area of one belt ply 7A is 1350 to 1980 g/sq.m.
Further, it is preferable that the weight of the topping rubber included per unit area of one belt ply 7A is 600 to 1300 g/sq.m.

It is preferable that, as shown in FIG. 3, one belt ply includes 40 to 60 steel cords 12 per 5 cm width (width in the direction perpendicular to the length direction of the parallel steel cords 12).

As to the material of the steel cords 12, there is used one of high-strength steel materials such as a so-called ST material (super tensile material) by which a tensile strength of 3,600 MPa or more can be expected; a so-called UT material (ultra tensile material) by which a tensile strength of 4,000 MPa or more can be expected; and a so-called MT material (mega tensile materials) by which a tensile strength of 4,500 MPa or more can be expected.
For this purpose, it is preferable that the carbon content of the material of the steel cords 12 is 0.79% to 1.00%. In the present invention, however, the steel cords 12 are not limited to such materials.

The strength of each steel cord 12 is preferably in a range from 350 to 540N. The outer diameter of each steel cord 12 is preferably in a range from 0.22 to 0.55 mm. Thereby, it is possible to reduce the weight of the tire while ensuring the reinforcing effect on the tread portion 2 by the belt layer 7, and as a result, the rolling resistance performance can be improved.

The strength is measured according to a measuring method prescribed in Japanese Industrial Standards (JIS) G3510.

In a not-claimed embodiment, the steel cords 12 each have a 1x1 structure, which means that the cord is a monofilament (not shown).
For example, the outer diameter of the monofilament is in a range from 0.30 to 0.50 mm.

In the present invention, each steel cord 12 has a 1 x n cord structure consisting of a number (n) of filaments 15.

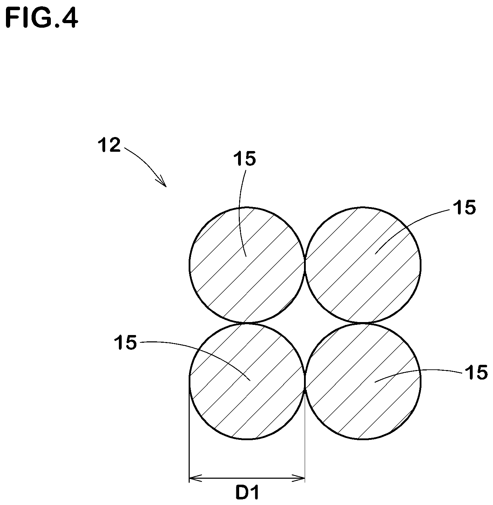

FIG. 4 shows a cross-sectional view of another example of the steel cord 12 which can be employed in the present embodiment. This cord 12 has a 1 x 4 cord structure. The outer diameter D1 of each filaments 15 is set in a range from 0.15 to 0.30 mm. Thereby, the ride comfort performance and rolling resistance performance can be improved in a well-balanced manner.

While detailed description has been made of a preferable embodiment of the present invention, the present invention can be embodied in various forms within the scope of the appended claims.

### Comparison tests

Based on the structure shown in FIG. 1, pneumatic tires of size 205/55R16 having specifications shown in Tables 1 and 2 were experimentally manufactured as test tires including Example tires Ex1-Ex20 and Comparative tires Ref1-Ref4.
All the test tires were substantially the same except for the parameters T1, T2, La and tanδ1 and the product value.
The test tires were mounted on wheel rims of size 16x6.5 and inflated to 250 kPa, and then tested for the rolling resistance performance and ride comfort performance.

### < Rolling resistance performance test >

Using a rolling resistance test machine, the rolling resistance of each test tire was measured.
The measured results were converted into index numbers wherein the smaller the numerical value, the lower the rolling resistance.

### < Ride comfort performance test >

Using a 2000cc front engine front wheel drive test car with the test tires attached to all wheels, a test driver evaluated the ride comfort performance when running on a test course, and the results were indicated by an index wherein the larger the number, the better the ride comfort performance.

The test results are shown in Tables 1 and 2.

**Table 1**

| Tire | Ref1 | Ref2 | Ref3 | Ref4 | Ex1 | Ex2 |
|---|---|---|---|---|---|---|
| Tread rubber thickness T1(mm) | 11.6 | 11.6 | 8.5 | 9.0 | 9.5 | 9.7 |
| Belt ply thickness T2(mm) | 0.66 | 0.98 | 0.66 | 0.66 | 0.66 | 0.66 |
| Land ratio La | 0.78 | 0.78 | 0.40 | 0.50 | 0.60 | 0.64 |
| Tread rubber tanδ1 | 0.23 | 0.28 | 0.14 | 0.10 | 0.15 | 0.14 |
| T1 x T2 x La x tanδ1 | 1.37 | 2.48 | 0.31 | 0.30 | 0.56 | 0.57 |
| T1 x T2 x La | 2.08 | 2.53 | 0.48 | 0.45 | 0.86 | 0.87 |
| Rolling resistance | 8.1 | 8.6 | 5.8 | 5.7 | 6.5 | 6.7 |
| Ride comfort | 50 | 50 | 45 | 45 | 60 | 60 |
| | | | | | | |

| Tire | Ex3 | Ex4 | Ex5 | Ex6 | Ex7 | Ex8 |
|---|---|---|---|---|---|---|
| Tread rubber thickness T1(mm) | 9.5 | 9.7 | 8.5 | 9.5 | 10.5 | 11.0 |
| Belt ply thickness T2(mm) | 0.98 | 0.98 | 0.66 | 0.70 | 0.75 | 0.98 |
| Land ratio La | 0.65 | 0.68 | 0.55 | 0.70 | 0.70 | 0.64 |
| Tread rubber tanδ1 | 0.18 | 0.17 | 0.11 | 0.15 | 0.16 | 0.16 |
| T1 x T2 x La x tanδ1 | 1.09 | 1.10 | 0.34 | 0.70 | 0.88 | 1.10 |
| T1 x T2 x La | 1.11 | 1.12 | 0.51 | 1.00 | 1.18 | 1.13 |
| Rolling resistance | 6.8 | 7.0 | 6.2 | 6.7 | 7.2 | 7.4 |
| Ride comfort | 60 | 60 | 55 | 65 | 65 | 70 |

**Table 2**

| Tire | Ex9 | Ex10 | Ex11 | Ex12 | Ex13 | Ex14 |
|---|---|---|---|---|---|---|
| Tread rubber thickness T1(mm) | 7.5 | 9.0 | 12.0 | 13.0 | 9.5 | 9.5 |
| Belt ply thickness T2(mm) | 0.66 | 0.66 | 0.66 | 0.66 | 0.50 | 0.60 |
| Land ratio La | 0.45 | 0.60 | 0.80 | 0.85 | 0.60 | 0.60 |
| Tread rubber tanδ1 | 0.15 | 0.15 | 0.15 | 0.15 | 0.15 | 0.15 |
| T1 x T2 x La x tanδ1 | 0.33 | 0.53 | 0.95 | 1.09 | 0.43 | 0.51 |
| T1 x T2 x La | 0.51 | 0.81 | 1.44 | 1.66 | 0.86 | 0.86 |
| Rolling resistance | 6.0 | 6.5 | 7.2 | 7.5 | 6.3 | 6.4 |
| Ride comfort | 55 | 60 | 70 | 75 | 60 | 60 |
| | | | | | | |

| Tire | Ex15 | Ex16 | Ex17 | Ex18 | Ex19 | Ex20 |
|---|---|---|---|---|---|---|
| Tread rubber thickness T1(mm) | 9.5 | 9.5 | 9.5 | 9.5 | 9.5 | 9.5 |
| Belt ply thickness T2(mm) | 1.00 | 1.20 | 0.66 | 0.66 | 0.66 | 0.66 |
| Land ratio La | 0.60 | 0.60 | 0.60 | 0.60 | 0.60 | 0.60 |
| Tread rubber tanδ1 | 0.15 | 0.15 | 0.10 | 0.12 | 0.25 | 0.27 |
| T1 x T2 x La x tanδ1 | 0.86 | 1.03 | 0.38 | 0.45 | 0.94 | 1.02 |
| T1 x T2 x La | 0.86 | 0.86 | 0.57 | 0.68 | 1.43 | 1.54 |
| Rolling resistance | 6.7 | 7.0 | 6.0 | 6.1 | 7.2 | 7.3 |
| Ride comfort | 60 | 60 | 60 | 60 | 60 | 60 |

As shown in Tables 1 and 2, as the Comparative tires Ref1 and Ref2 had large product values (T1 x T2 x La x tanδ1), the rolling resistance performance became 8.1 to 8.6. On the other hand, as the Comparative tires Ref3 and Ref4 had smaller product values (T1 x T2 x La x tanδ1), the rolling resistance performance was improved, but the ride comfort performance became 45. In the Example tires Ex1 to Ex20, as the product values (T1 x T2 x La x tanδ1) were set in the specifically-defined range, the rolling resistance performance was improved and reduced to 6.2 to 7.3, while maintaining the ride comfort performance at high levels of from 55 to 70. Thus, it was confirmed that the tires according to the present invention can be improved in rolling resistance performance without deteriorating the ride comfort performance.

### Description of the reference signs

- 2: tread portion
- 2s: ground contacting surface
- 2G: tread rubber
- 12: steel cord
- 13: topping rubber
- 7A: belt ply
- 10: reinforcing cord layer
- T1: tread rubber thickness at tire equator
- T2: average thickness of one belt ply

## Claims

1. A pneumatic tire (1) comprising a tread portion (2) provided with:
a reinforcing cord layer (10) including at least one belt ply (7A) of steel cord (12)s (12) rubberized with topping rubber; and
a tread rubber (2G) forming a part of the tread portion (2) from a ground contacting surface (2s) of the tread portion (2) to the radially outer side of the reinforcing cord layer (10),
wherein
a product (T1 x T2 x La x tanδ1) of
the thickness T1 (mm) of the tread rubber (2G) measured at the tire equator (C),
the average thickness T2 (mm) of the or each belt ply (7A),
the land ratio La of the ground contacting surface (2s), and
the loss tangent tanδ1 of the tread rubber (2G) at 30 degrees C,
is in a range from 0.33 to 1.10, wherein the loss tangent value is measured according to Japanese Industrial Standards (JIS) K6394 under the conditions of Initial strain: 10%, Dynamic strain amplitude: +/- 2%, Frequency: 10Hz and Deformation mode: tension,
**characterized in that**
the steel cords (12) each have a 1 x n cord structure consisting of a number n of filaments each having an outer diameter of 0.15 to 0.30 mm.

2. The pneumatic tire (1) according to claim 1, wherein
the average thickness T2 is 0.66 to 0.98 mm.

3. The pneumatic tire (1) according to claim 1 or 2, wherein
a product (T1 x La x tanδ1) of the thickness T1 (mm), the land ratio La, and the loss tangent tanδ1 is 0.51 to 1.12.

4. The pneumatic tire (1) according to any one of claims 1 to 3, which is a passenger car tire provided with a carcass (6) of a radial ply structure in which carcass cords are arranged at an angle of 70 to 90 degrees with respect to the tire equator (C).

5. The pneumatic tire (1) according to any one of claims 1 to 4, wherein
the reinforcing cord layer (10) includes:
a belt layer (7) composed of radially outer and inner belt plies (7A) which overlap one upon the other in the tire radial direction, and
a band layer (8) disposed radially outside the belt layer (7) and composed of at least one band cord (8c) arranged at an angle of not more than 5 degrees with respect to the tire circumferential direction.

6. The pneumatic tire (1) according to any one of claims 1 to 5, wherein
the steel cords (12) each have an outer diameter in a range from 0.22 to 0.55 mm.

7. The pneumatic tire (1) according to any one of claims 1 to 6, wherein
the steel cords (12) each have a strength in a range from 350N to 540N.

8. The pneumatic tire (1) according to any one of claims 1 to 7, wherein
the material of the steel cord (12) has a carbon content of 0.79% to 1.00%.

9. The pneumatic tire (1) according to any one of claims 1 to 8, wherein
the steel cords (12) of the/each belt ply (7A) have a cord count of 40 to 60 cords per 5 cm width.

## Patentansprüche

1. Luftreifen (1), umfassend einen Laufflächenabschnitt (2), der versehen ist mit:
einer Verstärkungskordschicht (10), die mindestens eine Gürtellage (7A) aus Stahlkorden (12) umfasst, die mit Deckgummi gummiert sind; und
einem Laufflächengummi (2G), der einen Teil des Laufflächenabschnitts (2) von einer Bodenkontaktfläche (2s) des Laufflächenabschnitts (2) zu der radial äußeren Seite der Verstärkungskordschicht (10) bildet, wobei
ein Produkt (T1 x T2 x La x tanδ1) aus
der Dicke T1 (mm) des Laufflächengummis (2G), gemessen an dem Reifenäquator (C),
der durchschnittlichen Dicke T2 (mm) der oder jeder Gürtellage (7A), dem Landverhältnis La der Bodenkontaktfläche (2s) und
dem Verlusttangens tanδ1 des Laufflächengummis (2G) bei 30 Grad C,
in einem Bereich von 0,33 bis 1,10 liegt, wobei der Verlusttangenswert gemäß den japanischen Industrienormen (JIS) K6394 unter den Bedingungen Anfangsdehnung: 10 %, Amplitude der dynamischen Dehnung: +/- 2 %, Frequenz: 10 Hz und Verformungsmodus: Spannung gemessen wird,
**dadurch gekennzeichnet, dass**
die Stahlkorde (12) jeweils eine 1 x n Kordstruktur aufweisen, die aus einer Anzahl n von Filamenten besteht, die jeweils einen Außendurchmesser von 0,15 bis 0,30 mm aufweisen.

2. Luftreifen (1) nach Anspruch 1, wobei die durchschnittliche Dicke T2 0,66 bis 0,98 mm beträgt.

3. Luftreifen (1) nach Anspruch 1 oder 2, wobei ein Produkt (T1 x La x tanδ1) aus der Dicke T1 (mm), dem Landverhältnis La und dem Verlusttangens tanδ1 0,51 bis 1,12 beträgt.

4. Luftreifen (1) nach einem der Ansprüche 1 bis 3, der ein PKW-Reifen ist, der mit einer Karkasse (6) mit einer radialen Lagenstruktur versehen ist, in der Karkasskorde unter einem Winkel von 70 bis 90 Grad in Bezug auf den Reifenäquator (C) angeordnet sind.

5. Luftreifen (1) nach einem der Ansprüche 1 bis 4, wobei die Verstärkungskordschicht (10) umfasst:
eine Gürtelschicht (7), die aus radial äußeren und inneren Gürtellagen (7A) besteht, die einander in der Reifenradialrichtung überlappen, und
eine Bandschicht (8), die radial außen von der Gürtelschicht (7) angeordnet ist und aus mindestens einem Bandkord (8c) besteht, der unter einem Winkel von nicht mehr als 5 Grad in Bezug auf die Reifenumfangsrichtung angeordnet ist.

6. Luftreifen (1) nach einem der Ansprüche 1 bis 5, wobei die Stahlkorde (12) jeweils einen Außendurchmesser in einem Bereich von 0,22 bis 0,55 mm aufweisen.

7. Luftreifen (1) nach einem der Ansprüche 1 bis 6, wobei die Stahlkorde (12) jeweils eine Festigkeit in einem Bereich von 350 N bis 540 N aufweisen.

8. Luftreifen (1) nach einem der Ansprüche 1 bis 7, wobei das Material des Stahlkords (12) einen Kohlenstoffgehalt von 0,79 % bis 1,00 % aufweist.

9. Luftreifen (1) nach einem der Ansprüche 1 bis 8, wobei die Stahlkorde (12) der/jeder Gürtellage (7A) eine Kordanzahl von 40 bis 60 Korden pro 5 cm Breite aufweisen.

## Revendications

1. Pneumatique (1) comprenant une partie bande de roulement (2) pourvu de :
une couche de câbles de renforcement (10) comportant au moins une nappe de ceinture (7A) en câbles d'acier (12)s (12) enrobée de caoutchouc avec du caoutchouc de surface ; et
un caoutchouc de bande de roulement (2G) formant une portion de la partie bande de roulement (2) à partir d'une surface de contact avec le sol (2s) de la partie bande de roulement (2) vers le côté radialement extérieur de la couche de câbles de renforcement (10),
dans lequel
un produit (T1 × T2 × La × tan δ1) de
l'épaisseur T1 (mm) de caoutchouc de bande de roulement (2G) mesurée au centre du pneumatique (C), de l'épaisseur moyenne T2 (mm) de la nappe ou de chaque nappe de ceinture (7A), du rapport de surface au sol La de la surface de contact avec le sol (2s), et de la tangente de perte tan δ1 du caoutchouc de bande de roulement (2G) à 30 degrés C,
se situe dans une plage de 0,33 à 1,10, dans lequel la valeur de la tangente de perte est mesurée selon des normes industrielles japonaises (JIS) K6394 dans les conditions de contrainte initiale : 10 %, d'amplitude de contrainte dynamique : +/- 2 %, de fréquence : 10 Hz, et en mode de déformation : traction,
**caractérisé en ce que**
les câble d'aciers (12) ont chacun une structure à 1 × n câbles constitués d'un nombre n de filaments ayant chacun un diamètre extérieur de 0,15 à 0,30 mm.

2. Pneumatique (1) selon la revendication 1, dans lequel l'épaisseur moyenne T2 est de 0,66 à 0,98 mm.

3. Pneumatique (1) selon la revendication 1 ou la revendication 2, dans lequel un produit (T1 × La × tan δ1) de l'épaisseur T1 (mm), du rapport de surface au sol La et de la tangente de perte tan δ1 est de 0,51 à 1,12.

4. Pneumatique (1) selon l'une quelconque des revendications 1 à 3, qui est un pneumatique de voiture de tourisme muni d'une carcasse (6) d'une structure en câbles radiale dans laquelle des câbles de carcasse sont disposés à un angle de 70 à 90 degrés par rapport au centre du pneumatique (C).

5. Pneumatique (1) selon l'une quelconque des revendications 1 à 4, dans lequel la couche de câbles de renforcement (10) comporte :
une couche de ceinture (7) composée de câbles de ceinture (7A) radialement extérieurs et intérieurs qui se superposent les uns aux autres en direction radiale, et
une couche de bande (8) disposée radialement à l'extérieur de la couche de ceinture (7) et composée d'au moins un câble de bande (8c) disposé à un angle de pas plus de 5 degrés par rapport à la direction circonférentielle.

6. Pneumatique (1) selon l'une quelconque des revendications 1 à 5, dans lequel
les câbles d'acier (12) ont chacun un diamètre extérieur dans une plage de 0,22 à 0,55 mm.

7. Pneumatique (1) selon l'une quelconque des revendications 1 à 6, dans lequel les câbles d'acier (12) ont chacun une résistance dans une plage de 350 N à 540 N.

8. Pneumatique (1) selon l'une quelconque des revendications 1 à 7, dans lequel
le matériau du câble d'acier (12) possède une teneur en carbone de 0,79 % à 1,00 %.

9. Pneumatique (1) selon l'une quelconque des revendications 1 à 8, dans lequel
les câbles d'acier (12) de la nappe/chaque nappe de ceinture (7A) ont un nombre de câbles de 40 à 60 câbles par 5 cm de largeur.
